# EUROPÄISCHE PATENTANMELDUNG

(11) **EP 1 582 407 A1**
(43) Veröffentlichungstag der Anmeldung: **05.10.2005**
(21) Anmeldenummer: 04405198.5
(22) Anmeldetag: 01.04.2004
(51) Int. Cl.: B60R 9/04

(54) **Dachreling**

(71) Anmelder: Alcan Technology & Management Ltd., 8212 Neuhausen am Rheinfall (CH)
(72) Erfinder: Herz, Erich, 78221 Singen (DE)

(57) **Zusammenfassung**

Eine Dachreling zur Befestigung an einem Fahrzeug, insbesondere an einem Personenwagen, Transporter oder dgl. Nutzfahrzeug, weist wenigstens einen Relingfuss (12) mit einem Zapfen (16) und einen mit dem Relingfuss (12) verbundenen Relingstab (14) mit einem Profilhohlraum (15) auf. Der in den Profilhohlraum (15) eingreifende Zapfen (16) hat bis auf ein durch Fertigungstoleranzen bedingtes Spiel einen Querschnitt, der im wesentlichen dem Querschnitt des Profilhohlraumes (15) entspricht, und ist über einen zwischen der Zapfenumfangfläche (32) und der Profilhohlraumwand (30) angeordneten Kleber (28) mit dem Relingstab (14) verklebt. Am Zapfen (16) ist wenigstens ein umlaufendes, der Zapfenumfangfläche (32) und der Profilhohlraumwand (30) anliegendes elastisches Element (24) zum Einmitten des Zapfens (16) im Profilhohlraum (15) angeordnet. Ein aufwendiges Ausrichten von Relingfuss und Relingstab in einer Montagevorrichtung zur Vermeidung eines Versatzes beim Übergang des Relingfusses zum Relingstab entfällt.

## Beschreibung

Die Erfindung betrifft eine Dachreling zur Befestigung an einem Fahrzeug, insbesondere an einem Personenwagen, Transporter oder dgl. Nutzfahrzeug, mit wenigstens einem Relingfuss mit einem Zapfen und einem mit dem Relingfuss verbundenen Relingstab mit einem Profilhohlraum, wobei der Zapfen bis auf ein durch Fertigungstoleranzen bedingtes Spiel einen im wesentlichen dem Querschnitt des Profilhohlraumes entsprechenden Querschnitt aufweist, in den Profilhohlraum eingreift und über einen zwischen der Zapfenumfangfläche und der Profilhohlraumwand angeordneten Kleber mit dem Relingstab verklebt ist.

Bei stranggepressten Relingstäben ergibt sich zwischen dem in den Profilhohlraum des Relingstabes eingesetzten Zapfen des Relingfusses und der Profilhohlraumwand ein durch fertigungstechnische Toleranzen bedingtes Spiel, das an der fertigen Dachreling ohne entsprechende Gegenmassnahmen zu einem optisch störenden Versatz beim Übergang des Relingfusses in den Relingstab führt. Um die Bildung eines Versatzes zu verhindern, müssen die miteinander zu verbindenden Teile in der Montagevorrichtung bis zum Aushärten des in den Spalt zwischen der Zapfenumfangfläche und der Profilhohlraumwand einbrachten Klebers behelfsmässig ausgerichtet werden.

Der Erfindung liegt die Aufgabe zugrunde, den Verbindungsbereich zwischen dem Zapfen und der Profilhohlraumwand bei einer Dachreling der eingangs genannten Art so auszugestalten, dass sich ein aufwendiges Ausrichten von Relingfuss und Relingstab in einer Montagevorrichtung zur Vermeidung eines Versatzes beim Übergang des Relingfusses in den Relingstab erübrigt.

Zur erfindungsgemässen Lösung der Aufgabe führt, dass am Zapfen wenigstens ein umlaufendes, der Zapfenumfangfläche und der Profilhohlraumwand anliegendes elastisches Element zum Einmitten des Zapfens im Profilhohlraum angeordnet ist.

Mit der erfindungsgemässen Anordnung eines elastischen Elementes zwischen der Zapfenumfangfläche und der Profilhohlraumwand wird der Zapfen automatisch eingemittet.

Bei einer bevorzugten Ausführungsform ist an der Zapfenumfangfläche eine Ringnut mit in dieser eingelegtem O-Ring angeordnet. Der Nutquerschnitt und der Querschnitt des O-Ringes sind so aufeinander abgestimmt, dass der 0-Ring beim Einschieben des Zapfens in den Profilhohlraum des Relingstabes der Profilhohlraumwand reibschlüssig anliegt und nicht aus der Ringnut herausgedrückt werden kann. Der O-Ring ragt allseitig über die Zapfenumfangfläche hinaus und liegt der Profilhohlraumwand bei vollständig eingeführtem Zapfen form- und kraftschlüssig an.

Insbesondere bei geschmiedeten und gegossenen Relingfüssen aus Metall wird der Übergang des Zapfens in den Relingfuss zur Bildung eines schmiede- und giesstechnisch nicht zu erreichenden scharfkantigen Absatzes als Anschlagfläche für den Relingstab durch Fräsen nachbearbeitet. Gleichzeitig mit der Nachbearbeitung des Übergangs wird auch die angrenzende Ringnut gefräst.

Bevorzugt ist die Ringnut im Bereich des Übergangs des Zapfens in den Relingfuss so in einem Abstand zu einer Anschlagfläche für den Relingstab angeordnet, dass der O-Ring auch in gequetschtem Zustand nicht zwischen die Stirnseite des Relingstabes und die Anschlagfläche am Relingfuss gelangen kann.

Neben seiner einmittenden Funktion erfüllt das elastische Element bzw. der in die Ringnut eingelegte O-Ring die Funktion einer Dichtung, die den Austritt eines im Spalt zwischen der Zapfenumfangfläche und der Profilhohlraumwand angeordneten Klebers an der Stirnseite des Relingstabes verhindert. Der Kleber wird vor dem Fügen der Teile auf die den eingeführten Zapfen umgebende Profilhohlraumwand und/oder auf die Zapfenumfangfläche aufgebracht. Bevorzugt wird nur im Bereich der zwischen Stirnseite und Ringnut liegenden Zapfenumfangfläche eine Klebverbindung mit dem Relingstab ausgebildet.

Eine kostengünstige Dachreling ergibt sich mit einem als Schmiedeteil aus Aluminium oder einer Aluminiumlegierung ausgeführten Relingfuss. Der Relingfuss kann jedoch auch im Kokillengiess-, Druckgiess-, Vakuumdruckgiess- oder einem anderen Giessverfahren hergestellt werden. Weitere geeignete Herstellungsverfahren sind Thixocasting und Thixoschmieden. Als Werkstoffe können auch Magnesium, Zink, Legierungen auf der Basis dieser Metalle, ggf. mit Metall-, Kohlenstoff- oder Glasfasern verstärkte Kunststoffe sowie weitere Materialien eingesetzt werden.

Der Relingstab ist bevorzugt ein aus Aluminium oder einer Aluminiumlegierung stranggepresstes Hohlprofil. Andere geeignete Werkstoffe sind Magnesium, Zink, Legierungen auf der Basis dieser Metalle, ggf. mit Metall-, Kohlenstoff- oder Glasfasern verstärkte Kunststoffe sowie weitere Materialien.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisch in
- - Fig. 1: eine teilweise geschnittene Seitenansicht eines Teils einer Dachreling;
- - Fig. 2: ein Detail von Fig. 1 in vergrösserter Darstellung.

Eine aus Gründen der besseren Übersicht nicht vollständig wiedergegebene Dachreling 10 für einen Personenkraftwagen weist einen einer Dachhaut 11 aufliegenden Relingfuss 12 auf. Ein vom Relingfuss 12 abragender Zapfen 16 ist von einem Relingstab 14 mit einen Profilhohlraum 15 übergriffen.

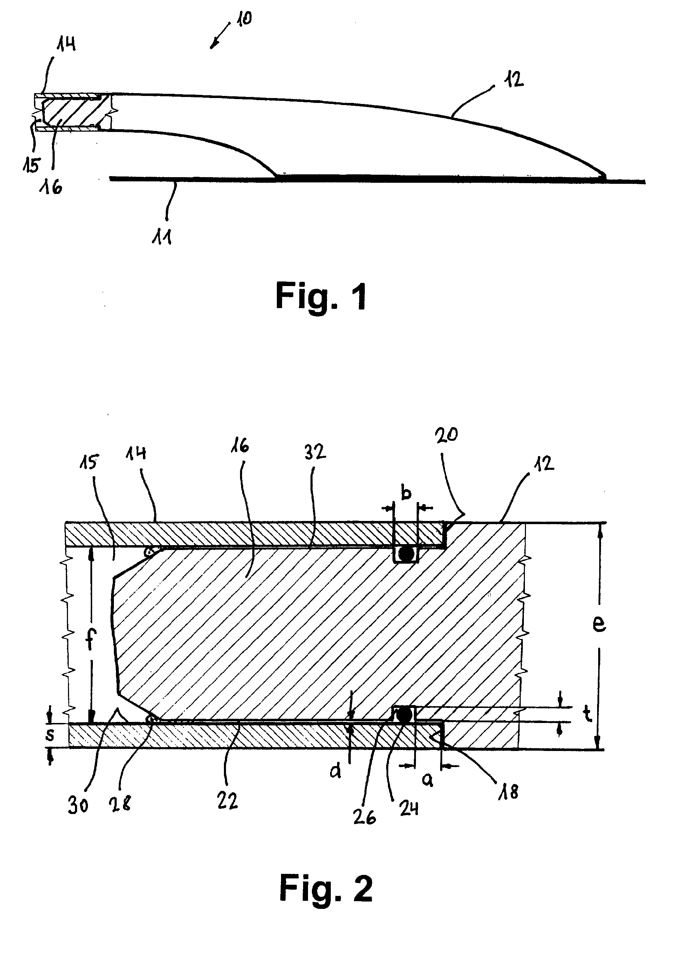

Wie in Fig. 2 detailliert gezeigt, verringert sich der Querschnitt des Relingfusses 12 beim Übergang zum Zapfen 16 auf den Querschnitt des Zapfens 16 unter Bildung einer Anschlagfläche18 für eine Stirnfläche 20 des Relingstabes 14.

Der Querschnitt des Zapfens 16 entspricht im Wesentlichen dem Querschnitt des Profilhohlraumes 15, wobei vor allem die Querschnittsmasse des Profilhohlraumes 15 durch fertigungstechnisch bedingte Toleranzen so vorgegeben sind, dass der Zapfen 16 im Profilhohlraum 15 ein für den Zusammenbau ausreichendes Spiel aufweist. Im vorliegenden Beispiel liegt dieses Spiel bzw. die Breite des zwischen der Zapfenumfangfläche 32 und der Profilhohlraumwand 30 vorhandenen Spaltes 22 bei einem Relingstab 14 mit einem für den Relingstab 14 typischen Querschnitt mit einem Aussenmass e von 25 mm, einem Innenmass f von 20 mm und einer Wandstärke s von 2,5 mm bei etwa 0,2 mm. Zur Optimierung der Kleberaufnahme und der Kleberhaftung werden z.B. umlaufende Rillen oder Klebetaschen durch Fräsen oder Schmieden in die Zapfenumfangfläche 32 eingearbeitet. Bei dieser Nachbearbeitung des Zapfens 16 verringern sich auch die fertigungstechnisch bedingten Toleranzen. Ein Kleber 28 wird vor dem Fügen der Teile auf die den eingeführten Zapfen 16 umgebende Profilhohlraumwand 30 aufgebracht.

An der Zapfenumfangfläche 32 ist in einem Abstand a von 3 mm zur Anschlagfläche 18 eine umlaufende Nut oder Ringnut 26 einer Breite b von 2,5 mm und einer Tiefe t von 1,5 mm angeordnet. Die Ringnut 26 wird bei der ohnehin durchzuführenden Nacharbeitung des Übergangs des Zapfens 16 in den Relingfuss 14 in die Zapfenumfangfläche 32 gefräst. In diese Ringnut 26 ist ein O-Ring 24 mit einem Durchmesser des Ringquerschnittes von etwa 2 mm eingelegt. Der O-Ring 24 ragt allseitig über die Zapfenumfangfläche 32 hinaus und liegt der Profilhohlraumwand 30 form- und kraftschlüssig an.

Der allseitig als Abstandshalter zur Profilhohlraumwand 30 wirkende O-Ring 24 führt zu einem automatischen Einmitten des auf diese Weise gelagerten Zapfens 16 und damit zu einem versatzfreien Übergang der Aussenflächen des Relingstabes 14 und des Relingfusses 12 bei der durch die Anschlagfläche 18 am Relingfuss 12 bzw. der dieser anliegenden Stirnfläche 20 des Relingstabes 14 definierten Stossfläche.

Neben der Zentrierfunktion bildet der O-Ring 24 eine Durchtrittssperre für den im Spalt 22 vorhandenen Kleber 28, z.B. ein Epoxykleber, und verhindert damit beim Zusammenbau der Dachreling 10 beim Einführen des Zapfens 16 in den Profilhohlraum 15 ein Eindringen von Kleber 28 in den Spalt zwischen der Anschlagfläche 18 am Relingfuss 12 und der Stirnfläche 20 des Relingstabes 14 und in der Folge ein Austreten von Klebstoff an der Oberfläche an der Stossfläche von Relingfuss 12 und Relingstab 14.

## Patentansprüche

1. Dachreling zur Befestigung an einem Fahrzeug, insbesondere an einem Personenwagen, Transporter oder dgl. Nutzfahrzeug, mit wenigstens einem Relingfuss (12) mit einem Zapfen (16) und einem mit dem Relingfuss (12) verbundenen Relingstab (14) mit einem Profilhohlraum (15), wobei der Zapfen (16) bis auf ein durch Fertigungstoleranzen bedingtes Spiel einen im wesentlichen dem Querschnitt des Profilhohlraumes (15) entsprechenden Querschnitt aufweist, in den Profilhohlraum (15) eingreift und über einen zwischen der Zapfenumfangfläche (32) und der Profilhohlraumwand (30) angeordneten Kleber (28) mit dem Relingstab (14) verklebt ist,
**dadurch gekennzeichnet, dass**
am Zapfen (16) wenigstens ein umlaufendes, der Zapfenumfangfläche (32) und der Profilhohlraumwand (30) anliegendes elastisches Element (24) zum Einmitten des Zapfens (16) im Profilhohlraum (15) angeordnet ist.

2. Dachreling nach Anspruch 1, **dadurch gekennzeichnet, dass** an der Zapfenumfangfläche (32) eine Ringnut (26) mit in dieser eingelegtem 0-Ring (24) angeordnet ist.

3. Dachreling nach Anspruch 1 oder 2, **dadurch gekennzeichnet, dass** die Ringnut (26) im Bereich des Übergangs des Zapfens (16) in den Relingfuss (12) angeordnet ist.

4. Dachreling nach einem der Ansprüche 1 bis 3, **dadurch gekennzeichnet, dass** der Relingfuss (12) ein Schmiede- bzw. Thixoschmiede-, Druckguss-, Vakuumdruckguss-, Kokillenguss- oder Thixocastingteil aus Aluminium, Magnesium, Zink, einer Legierung auf Basis eines dieser Metalle oder ggf. mit Metall-, Kohlenstoff- oder Glasfasern verstärktem Kunststoff ist.

5. Dachreling nach einem der Ansprüche 1 bis 4, **dadurch gekennzeichnet, dass** der Relingstab (14) ein stranggepresstes Profil aus Aluminium, Magnesium, Zink, einer Legierung auf Basis eines dieser Metalle oder ggf. mit Metall-, Kohlenstoff- oder Glasfasern verstärktem Kunststoff ist.
